# EUROPEAN PATENT SPECIFICATION

(11) **EP 2 722 125 B1**
(45) Date of publication and mention of the grant of the patent: **09.09.2020**
(21) Application number: 13004914.1
(22) Date of filing: 14.10.2013
(51) Int. Cl.: B23K 11/11, B23K 11/31

(54) **Projection welding gun for fixing a workpiece, such as a bush, on a surface of a sheet member, and welding plant comprising it**
Projektionsschweißzange zum Befestigen eines Werkzeuges, wie beispielsweise einer Buchse, auf einer Oberfläche eines Blechelements, und Schweißanlage damit
Pistolet de soudage de projection pour fixer une pièce à travailler telle qu'une douille, sur la surface d'un élément en feuille et installation de soudage comprenant celui-ci

(30) Priority: 15.10.2012 IT TO20120900
(43) Date of publication of application: 23.04.2014
(73) Proprietor: KGR S.p.A., 10032 Brandizzo (Torino) (IT)
(72) Inventor: Simioli, Marco, 10040 Almese (TO) (IT)
(74) Representative: Cian, Paolo

(56) References cited:
- US-A- 5 528 011
- US-A- 5 628 923
- US-A- 5 977 505

## Description

The present invention relates to a gun adapted to fix a workpiece, such as a bush or a nut, on a surface of a sheet member, by using a known projection welding process.

Usually, fitting members, such as cover panels, are fixed on the members of motor-vehicle bodies, which can be connected by various devices. For this purpose, workpieces such as bushes, nuts or the like, can be fixed on the sheet metal portions of the body, typically by welding, to allow the fitting members to be connected by screws or other suitable locking means of a type known per se.

If it is required that welding used for such a fixing is not visible from the outside of the member on which it is carried out, it may be convenient to use a so-called "projection" welding. When the workpieces to be fixed to a portion of the body are bushes or nuts, or similar connection members, the projection welding thereof requires the presence of a series of indentations, formed so as to project from an annular flange of each workpiece on its side facing the body, which, during the welding operation, will penetrate into the body material as a result of application of high pressure and electric current, typical of projection welding.

According to the prior art, projection welding of workpieces such as bushes or nuts on a body involves the use of an equipment including a first, usually lower, stationary electrode, and a second, rod shaped, electrode, for example consisting of the stem of a cylinder actuator axially slidable with respect to the first electrode. A seat is formed on the lower electrode, which includes a resting surface provided with a relief intended to engage a hole of the relevant portion of the body, at which the bush or nut must be fixed. A centering pin extends from such a seat toward the upper electrode, on which the central hole of the bush or the nut will be inserted, after having engaged the portion of the body in said seat, with the aim of holding the bush or nut in the correct position during the welding operation. In order to ensure accurate positioning of the bush or the nut with respect to the hole of the body, this workpiece is also provided with a circular collar that projects from the annular flange, on the same side of the series of indentations, and that is intended to be precisely inserted in the respective hole of the body.

When a plurality of bushes or connecting nuts must be welded during a welding operation on a same portion of the body, the various welding equipment are included in a plant that is usually provided with a bedplate from which the various lower stationary electrodes extend, as well as with a overhead unit that supports the various movable upper electrodes, and to which the actuators for moving these upper electrodes are associated.

After the body member has been positioned so that the holes thereof engage the seats defined by the stationary electrodes, and after having inserted the bushes or nuts on the centering pins of such electrodes, as well as the respective circular collars in the holes of the body member, the upper electrodes are pressed on the bushes or nuts so as to perform the welding operation.

In practice, the known fixing operation for fixing bushes or nuts on a sheet member by projection welding requires that the position of each workpiece to be welded is referred precisely to the position of the other workpieces to be welded, or, in other words, it is necessary to refer to the relative position of the various holes of the body, since each bush or nut, by virtue of the presence of the circular collar and of the engagement thereof in the relevant hole, will take a position corresponding exactly to that of the respective hole of the body member.

In particular, the invention relates to a projection welding gun having the features mentioned in the preamble of appended claim 1.

A welding equipment having substantially the feature of the preamble of claim 1, except for the fact that it is not conceived for performing projection welds, is disclosed by US-5 628 923. The gun of this document is adapted to be mounted at the end of a robot arm and comprises a first electrode fixed at one end of a C-shaped arm, and a motor for controlling sliding of a rod to which a second pressure electrode is fixed. A powered sliding slide unit is interposed between the end of the robot arm and the gun, to allow the gun to be moved relative to the robot arm in order to change the position of the first electrode. An auxiliary reference unit, separated from the gun, is used to check, through a sensor, the correctness of the position of the first electrode, so as to take into account wearing of such electrode. Adjusting of the position of the first electrode is accomplished by moving the gun to a desired position by operating the motor of the sliding slide unit.

US-5 528 011 discloses a resistance welding gun to be handled by a robot arm, comprising two servomotors, one of which controls the movement of the whole gun with respect to the robot arm, and therefore the movement of a first welding electrode connected to a C-shaped arm of the gun, while the other servomotor controls the movement of the second welding electrode with respect to the gun body. Closure of the gun involves the operation of both the servomotors.

US-5 977 505 discloses a resistance welding gun adapted to weld to each other two sheets of different thickness. The gun is movably mounted at an end of the arm of a robot, through the operation of a first servomotor which causes the movement of a welding electrode carried by a C-shaped arm of the gun. A second servomotor carried by the body of the gun allows a rod to be moved, at one end thereof the other welding electrode of the gun is secured. In order to perform a welding operation, both the electrodes of the gun are moved until they reach the contact with the opposite surfaces of the workpiece to be welded, by the operation of both the servomotors.

Recently, the need to fix the bushes or the connecting nuts on a body member is felt, at positions that must be referred to the whole geometry of the body members concerned, rather than to the relative position of the holes formed in the member as it happened before. In particular, this allows a more accurate positioning to be obtained for the fitting members to be subsequently connected to the body members. Therefore, since position of the bushes or connection nuts need not more to be directly referred to the position of the holes in the body member, there is a greater tolerance for positioning the bushes or nuts with respect to the holes. In such a case, bushes or connection nuts are used that lack of any circular collar, since there is no longer the need to precisely position such workpieces with respect to the holes of the body member. Fixing of such bushes, nuts or the like, requires the use of a projection welding equipment different from that described above with reference to the prior art, which employs, for each workpiece to be welded on the body, an independent gun-shaped welding equipment.

In particular, the invention relates to a projection welding gun of the type defined in the appended claims.

According to the invention, the first welding electrode is supported by an electrode-holder connected to a first end of a substantially C-shaped arm, and has a seat adapted to receive said workpiece, the second end of said arm being connected to the body of said actuator, the second welding electrode being fixed to an electrode-holder connected to a rod of said actuator, which is slidably mounted along the axis of the first electrode, and having a resting surface the shape of which corresponds to a zone of the sheet member opposite to that to which said workpiece has to be fixed, the arm being associated with a support structure of the gun by means of an axial sliding unit, whereby, as a result of the operation of said actuator and of the attainment of the contact of the second welding electrode against the sheet member, the axial sliding unit causes the arm to move together with the workpiece to be welded, until the latter abuts against the sheet member on the side opposite to the first welding electrode, in order to cause closure of the welding gun.

By virtue of such features, the gun of the invention is made so as to be supported only by a base member, for example a bedplate in the case of a welding plant, in such a manner that its structure is simplified and the loading operation of a body member on which one or more bushes have to be welded, is made easier. Moreover, by virtue of the fact that positioning of the bushes to be welded is referred to the geometry of the body member rather than to the position of the holes thereof, it is possible to obtain a more accurate assembly of other workpieces on that member.

According to a preferred feature of the invention, an adjustable positioning unit is interposed between the support structure and the sliding unit, which adjustable positioning unit is adapted to allow the position of the welding gun with respect to the support structure to be finely changed.

In this manner, position of the gun can be changed at will in order to perform highly accurate weldings.

The invention also relates to a plant having the features defined in claims 8 to 10.

In particular, the structure of the plant of the invention allows to avoid use of a welding unit arranged overhead with respect to the bedplate, and thus the plant can be made less complex and cumbersome.

The invention will be clarified by the following detailed description, made with reference to the accompanying drawings, given by way of non-limitative example, in which:
Figure 1 is a schematic top elevational view of a welding plant that includes three projection welding guns according to the invention,

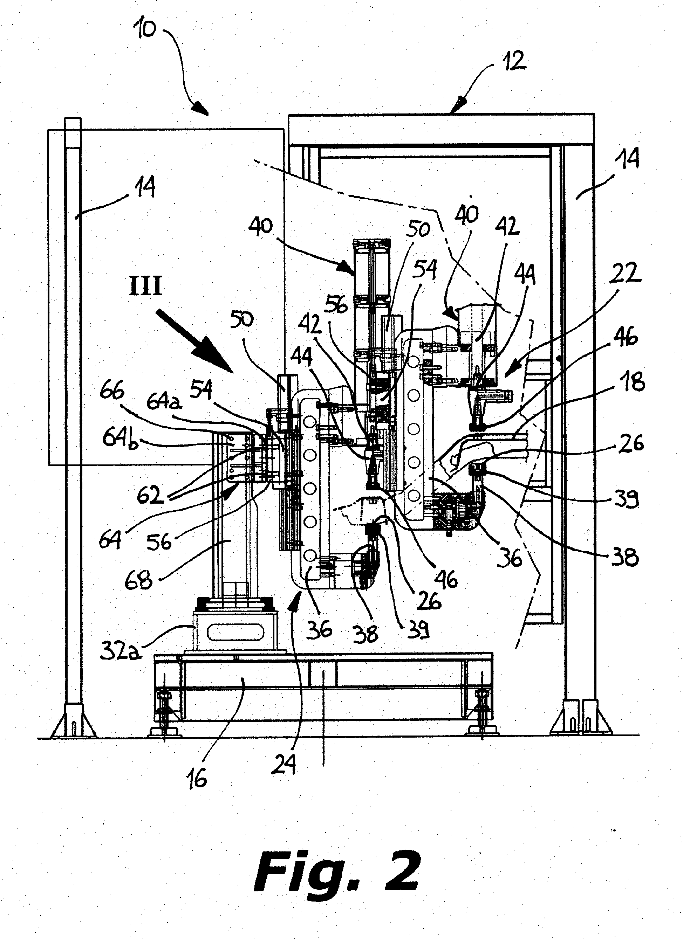

Figure 2 is a side elevational view from arrow II of Figure 1,
Figure 3 is an enlarged view of a detail indicated by arrow III in Figure 2,
Figure 4 is a top elevational view sectioned along line IV-IV of Figure 3,
Figure 5 is an enlarged view of a detail indicated by arrow V in Figure 4, and
Figure 6 is an enlarged view of a detail indicated by arrow VI in Figure 3.

With reference to the drawings, a projection welding plant for fixing workpieces on a sheet-metal member, typically a portion of a motor-vehicle body, is indicated 10 as a whole.

The plant 10 comprises a frame 12, made by a series, for example four, of uprights 14, connected together by crosspieces.

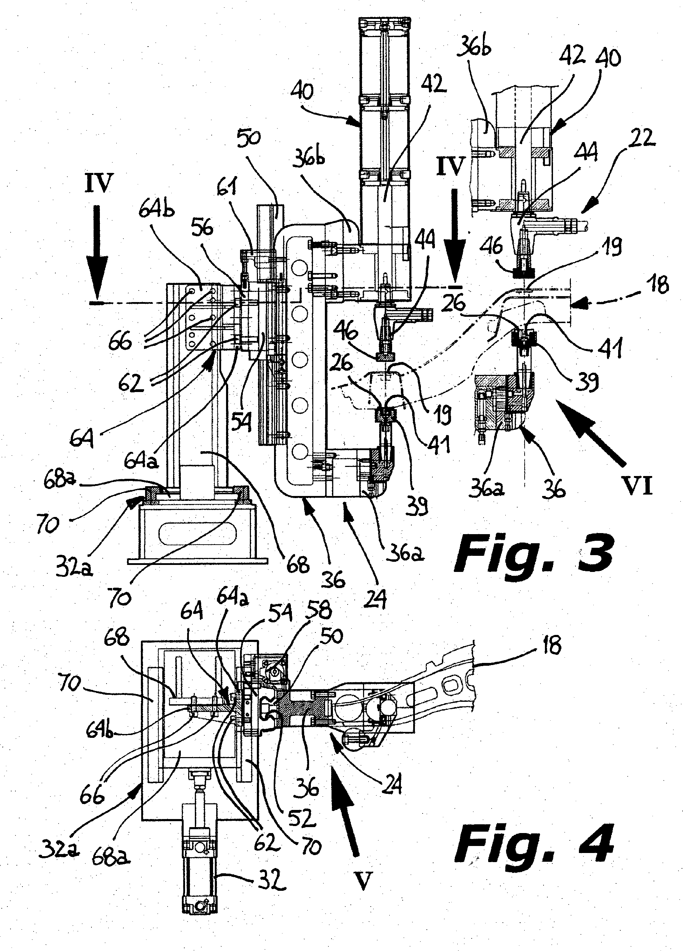

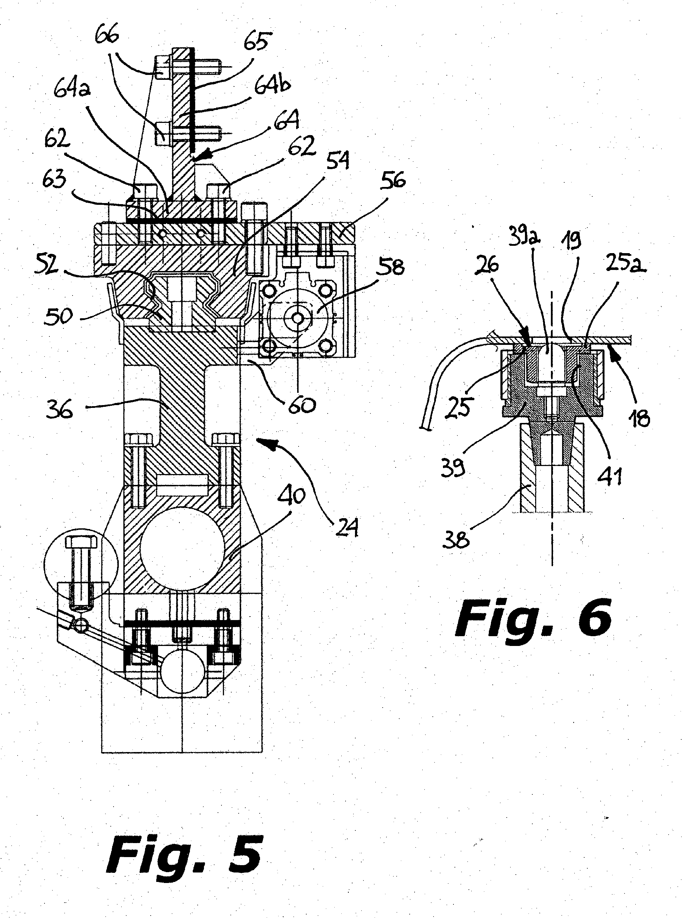

A platform 16 having the function of a bedplate for a series of equipment that include a resting structure (not shown) for supporting the sheet-metal member indicated by reference numeral 18, and at least one projection welding gun, is arranged inside of the frame 12. Each welding gun is intended to perform a projection welding operation for welding a workpiece at a predetermined zone of the sheet-metal member 18 in the vicinity of a through hole 19 thereof (Figures 3 and 6).

In the embodiment shown in the figures, the plant 10 includes three welding guns of the known so-called "slide gun" type, indicated 20, 22 and 24, respectively. Such guns are supported by the platform 16 and are adapted to be moved with respect to it, as a result of the operation of respective carriage motion devices generally indicated 28a, 30a and 32a, which are associated with the platform 16 and can be operated by respective actuators 28, 30 and 32, described in a greater detail below.

Preferably, the workpieces to be welded consist of metal bushes 26, adapted to be engaged by a respective locking member known per se, such as a screw or the like, in order to allow a fitting member, such as a body cover panel, to be connected to the member 18. As an alternative to the bushes 26, internally threaded nuts can be used, or other metal members provided with a through hole. Each bush 26 comprises a hollow cylindrical body from which an annular flange 25 extends radially, having, on its side facing the member 18, a series of indentations 25a intended to penetrate through the material of the member 18 and to be melted with it when projection welding is carried out.

Each gun 20, 22 and 24 includes a pair of opposite and aligned electrode-holder arms 38 and 44, provided with respective welding electrodes 39 and 46, lower and upper (with reference to the figures), respectively.

The lower electrode-holder 38 is supported by a first end 36a of a substantially C-shaped arm 36, and its electrode 39 has a cavity 41 (Figures 3 and 6) facing upwards, the shape of which corresponds to that of the outer surface of a bush 26 to be welded, which constitute a seat for this bush. Furthermore, a centering pin 39a (figure 6) projects upwards from the central hollow zone of the electrode 39, having a rounded free end.

The second end 36b of the arm 36 is connected to the body of an actuator 40 intended to control the movement of the electrodes 39 and 46 of the respective gun, which actuator comprises a rod 42 axially slidable with respect to the first electrode 39, which supports the upper electrode-holder 44 together with the respective welding electrode 46. The surface of the electrode 46 facing the member 18 is so shaped as to correspond to the zone of such a member involved in the welding operation, and typically has a planar shape, transverse to the axis of the electrode 46.

An axial sliding unit is associated with each welding gun 20, 22 and 24, in order to allow the respective gun to perform a vertical movement (with reference to the figures) with respect to the platform 16. Such a unit comprises a slide 50, consisting of a profiled and shaped metallic member that is fixed to the rear portion of the arm 36 on its side opposite to the electrodes 39 and 46, as well as a hollow track 52 also made of metal and having a profile corresponding to that of the slide 50, in which the slide 50 is slidably engaged.

The track 52 is supported by an elongated element 54, to which in turn a support plate 56 is fixed by screws.

An auxiliary compensation actuator 58 is connected to the plate 56, a portion of which is connected in an adjustable manner to the plate 56 by a cantilever arm 61 (Figure 3) and by a rod having an adjustable length, while the other portion of the actuator 58 is connected to the arm 36 by means of another cantilever arm 60 (Figure 5) in a similar manner to the arm 61. In this way, the auxiliary actuator 58, which is operatively interposed between the arm 36 and the plate 56, allows sliding of the arm 36 to be caused with respect to the plate 54 at the end of the execution of a welding operation, as it will be made more clear in the following.

Moreover, a bracket 64 is fixed on the side of the plate 56 opposite to the arm 36, which essentially consists of a pair of plates 64a and 64b arranged one perpendicular to the other, according to a substantially T-shaped configuration. Through holes are formed in both the plates 64a and 64b, which are engaged by respective screws indicated 62 and 66 (Figures 3 to 5), which screws are screwed into corresponding threaded holes of the plate 56 and of a vertical support upright 68 associated with the respective carriage moving device 28a, 30a and 32a.

In particular, each support upright 68 is supported by a base plate 68a slidably mounted along a pair of rectilinear and opposite guides 70, so that it can translate as a result of the operation of the respective actuator 28, 30, 32, in order to move the upright 68 and the relevant welding gun 20, 22, 24 with respect to the bedplate 16 and to the member 18.

Spacing members are interposed between the plate 64a and the plate 56, as well as between the plate 64b and the upright 68, preferably made by small plates 63 and 65, for example of the known "comb" type, the thickness of which is chosen as a function of the desired position of the relevant gun 20, 22 and 24 to be achieved with respect to the upright 68, in the transverse and axial directions, respectively.

The screws 62 and 66, together with the small spacing plates 63 and 65, constitute together adjustable connection members the function of which is to allow the position of each gun 20, 22 and 24 to be finely adjusted with respect to the upright 68 of the carriage moving device 28a, 30a and 32a, by means of the bracket 64.

In the operation of the plant 10, a sheet member 18, in which a series of holes 19 have been previously formed, is introduced, manually or automatically, into the frame 12 so that it rests on a correspondingly shaped support structure, at any rate adapted to support it during the welding operation.

The workpieces to be welded on the member 18, in the case shown the bushes 26, are introduced, manually or automatically, into the cavities 41 of the lower electrodes of the welding guns 20, 22 and 24, with the respective indentations 25a facing upwards, and therefore towards the member 18.

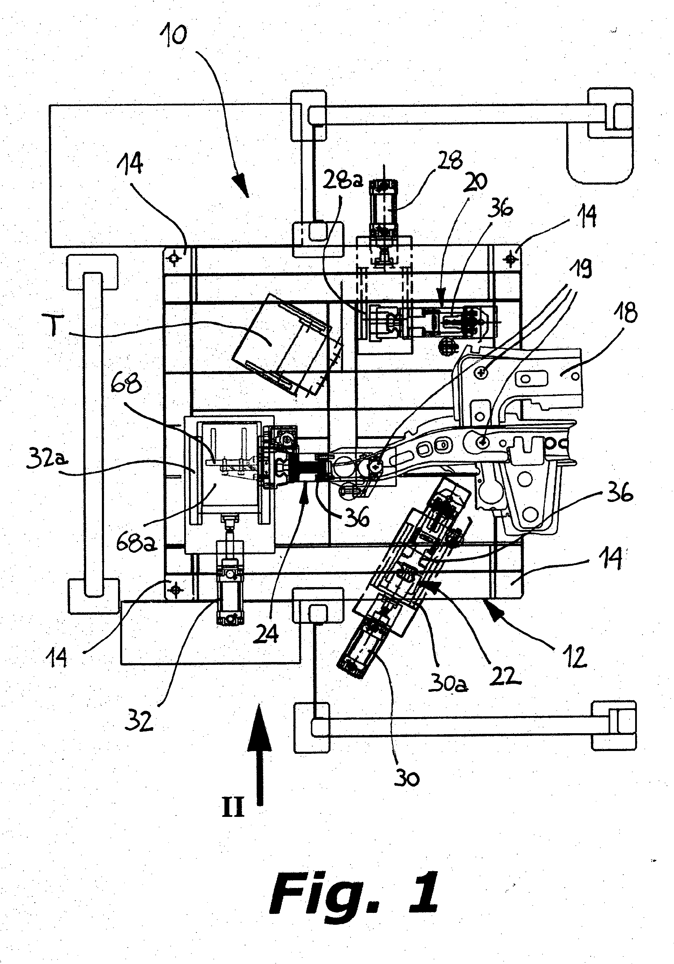

In the most general case, as mentioned above, the guns 20, 22 and 24 are movably supported by the platform 16 of the plant 10, in order to made easier introduction of the member 18. Each gun is then moved from an inactive resting position, in which the common axis of the electrodes 39 and 46 thereof is spaced from the sheet 18, to an active position of welding, in which the common axis of the electrodes passes through the sheet-metal member 18 at the hole 19 in the vicinity of which the relevant bush 26 will be welded. The movement of the guns 20, 22 and 24 is controlled automatically by the moving devices 28a, 30a and 32a through the respective actuators 28, 30 and 32 thereof, the operation of which allows each gun 20, 22 and 24, respectively, to be moved along the side or front direction, depending on the case, so as to bring the electrodes 39 and 46 of the C-shaped arms 36 in the respective positions of welding. In particular, in Figure 1 the arms 36 of the welding guns 20, 22 are shown in their inactive positions, that is spaced from the sheet-metal member 18, while the arm 36 of the gun 24 is already in its active position of welding in which the axis of the electrodes 39 and 46 thereof intercepts the respective hole 19 of the member 18, in which the welding operation can be started.

The fine adjustment of the position of the guns 20, 22 and 24 in their active condition of welding, is obtained by the aforesaid adjustable connection members, by inserting small spacer plates 63 and 65 of an appropriate thickness, between the plates 64a and 64b of the bracket 64 and the plate 56, on the one hand, and the upright 68, on the other hand, so that the common axis of the electrodes 39 and 46 of each gun reaches the correct position for executing the welding, that is in the vicinity of the center of the various holes 19. The small plates 63 and 65 of the "comb" type, can be inserted from a side of the bracket 64 so as to involve simultaneously a plurality of the screws 62 and 66, in order that the desired adjustment in the transverse and axial directions with respect to the respective upright 68 can be obtained. This adjustment is usually performed only once for each set of metal members 18 to be welded.

When each gun 20, 22 and 24 has reached the active position of welding in which the electrodes 39 and 46 thereof are substantially aligned with a hole 19 of the member 18, the actuators 40 are operated to cause downward displacement of the electrodes 46 until they abut against the upper surface of the member 18, and then, by reaction, lifting of the unit that consists of the arm 36 with the electrode 39, until the bush 26 associated with it abuts against the lower surface of the member 18, in order to obtain closure of the gun. In this configuration, the welding operation is performed for fixing the bushes 26 to the member 18.

After execution of the welding, the actuator 40 of each gun 20, 22 and 24 is driven in the opposite opening direction so as to bring the respective electrode 46 again in its position spaced from the member 18, and the actuator 58 of each gun is activated simultaneously, to bring the arms 36 back, together with the respective electrodes 39, in their position spaced from the member 18, so that the guns 20, 22 and 24 are brought back in the respective open configurations.

Driving of the actuators 28, 30 and 32 of the moving devices 28a, 30a and 32a, that is performed again in an automatic manner, allows then the guns 20, 22 and 24 to be brought back in the respective resting positions spaced from the workpiece 18, in view of its removal from the support structure of the welding plant 10, with the bushes 26 welded on it, to allow another member 18 to be positioned in the plant 10, on which welding of new bushes 26 can be performed.

## Claims

1. Welding gun for fixing a workpiece, such as a bush, on a surface of a sheet member, comprising a first and a second opposed and aligned welding electrodes (39, 46), and an actuator (40) for moving at least one of said electrodes (39, 46), the first welding electrode (39) being supported by an electrode-holder (38) connected to a first end (36a) of a substantially C-shaped arm (36) the second end of which is connected to the body of said actuator (40), the second welding electrode (46) being fixed to an electrode-holder (44) connected to a rod (42) of said actuator (40), which is slidably mounted along the axis of the first electrode (39), said arm (36) being associated with a support structure (68, 68a) of the gun by means of an axial sliding unit (50, 52),
**characterized in that**
- said welding gun is a projection welding gun (20, 22, 24),
- the first welding electrode (39) has a seat (41) adapted to receive said workpiece (26), and the second welding electrode (46) has a resting surface for abutting on the sheet member (18), which surface has a shape corresponding to a zone of the sheet member (18) opposite to that to which said workpiece (26) has to be fixed,
- said actuator (40) of the projection welding gun (20, 22, 24) controls the movement of both the electrodes (39, 46) during the closing step,
- said axial sliding unit (50, 52) includes a track (52) connected to said support structure (68, 68a), as well as a slide (50) fixed to said arm (36) and slidably engaged in said track (52),
- whereby, as a result of the operation of said actuator (40) and after the second welding electrode (46) has attained the contact against the sheet member (18), the axial sliding unit (50, 52) allows said arm (36) to move together with the workpiece (26) to be welded, which is arranged in said seat (41) of the first welding electrode (39), until the workpiece (36) abuts against the sheet member (18) on the side opposite to the second welding electrode (46), in order to cause closure of said projection welding gun (20, 22, 24).

2. Gun according to claim 1, **characterized in that** an auxiliary actuator (58) is operatively interposed between the arm (36) and the support structure (68, 68a), said auxiliary actuator being intended to be operated at the end of each welding step of a workpiece (26) on the respective sheet member (18), in order to bring the welding gun (20, 22, 24) back into its opened condition as a result of the sliding of the arm (36) with respect to the support structure (68, 68a).

3. Gun according to claim 1 or 2, **characterized in that** an adjustable positioning unit (62, 63, 64, 65, 66) is interposed between the support structure (68, 68a) and the sliding unit (50, 52), said adjustable positioning unit being adapted to allow the position of the welding gun (20, 22, 24) with respect to the support structure (68, 68a) to be finely changed.

4. Gun according to claim 3, **characterized in that** said adjustable positioning unit comprises a bracket (64) with which two series of adjustable connection members (62, 63, 65, 66) are associated, which is adapted to allow connection with the support structure (68, 68a) and with the welding gun (20, 22, 24), respectively.

5. Gun according to claim 4, **characterized in that** said bracket (64) comprises a pair of plates (64a, 64b) fixed perpendicularly according to a substantially T-shaped configuration, each plate being crossed by at least a respective screw connection member (62, 66), a respective spacer (63, 65) having a predetermined thickness being interposed between each plate (64a, 64b) and the welding gun (20, 22, 24), on one side, and the support structure (68, 68a), on the other side, in order to get a desired distance of the welding gun (20, 22, 24) with respect to the support structure (68, 68a), both in the transverse and in the axial direction, respectively.

6. Gun according to any one of claims 1 to 5, **characterized in that** said support structure (68, 68a) is slidably mounted along a guide formation (70) and is associated with an actuator (28, 30, 32) for controlling the translation thereof, the operation of which allows the gun (20, 22, 24) to be moved between an inactive position spaced from the member (18) to be welded, and an active position of welding in which the common axis of the electrodes (39, 46) thereof substantially crosses a hole (19) formed in the sheet member (18), at which a respective workpiece has to be welded.

7. Welding plant for fixing at least one workpiece, such as a bush, on a surface of a sheet member, **characterized in that** it comprises at least one projection welding gun (20, 22, 24) according to any one of claims 1 to 6, as well as a support member adapted to support said sheet member (18) during the welding step.

8. Plant according to claim 7, **characterized in that** it includes a bedplate (16) for commonly supporting the movable support structure (68, 68a) of each welding gun (20, 22, 24).

9. Plant according to claim 8, **characterized in that** each movable welding gun (20, 22, 24) is associated with a carriage moving device (28a, 30a and 32a) that is provided with the aforesaid guide formation (70) and is supported by the platform (16), said control actuator (28, 30, 32) being operatively interposed between the support structure (68, 68a) and the respective carriage moving device (28a, 30a and 32a) of each movable welding gun (20, 22, 24), and being automatically operable after positioning of the sheet member (18) on the respective support member.

## Patentansprüche

1. Schweißpistole zum Befestigen eines Werkstücks, wie z.B. einer Buchse, auf einer Oberfläche eines Blechelements, umfassend eine erste und eine zweite gegenüberliegende und ausgerichtete Schweißelektrode (39, 46) und einen Aktuator (40) zum Bewegen mindestens einer der Elektroden (39, 46), wobei die erste Schweißelektrode (39) von einem Elektrodenhalter (38) getragen wird, der mit einem ersten Ende (36a) eines im wesentlichen C-förmigen Arms (36) verbunden ist, dessen zweites Ende mit dem Körper des Aktuators (40) verbunden ist, wobei die zweite Schweißelektrode (46) an einem Elektrodenhalter (44) befestigt ist, der mit einer Stange (42) des Aktuators (40) verbunden ist, welche entlang der Achse der ersten Elektrode (39) verschiebbar montiert ist, wobei der Arm (36) mittels einer axialen Verschiebeeinheit (50, 52) mit einer Trägerstruktur (68, 68a) der Pistole verbunden ist, **dadurch gekennzeichnet, dass**
- die Schweißpistole eine Buckelschweißpistole (20, 22, 24) ist,
- die erste Schweißelektrode (39) einen Sitz (41) aufweist, der zur Aufnahme des Werkstücks (26) ausgelegt ist, und die zweite Schweißelektrode (46) eine Auflagefläche zur Anlage an dem Blechelement (18) aufweist, wobei die Fläche eine Form hat, die einer Zone des Blechelements (18) entspricht, welche derjenigen gegenüberliegt, an der das Werkstück (26) zu befestigen ist,
- der Aktuator (40) der Buckelschweißpistole (20, 22, 24) die Bewegung beider Elektroden (39, 46) während des Schließschrittes steuert,
- die axiale Verschiebeeinheit (50, 52) eine Schiene (52), die mit der Trägerstruktur (68, 68a) verbunden ist, sowie einen Schlitten (50) aufweist, der an dem Arm (36) befestigt ist und verschiebbar in die Schiene (52) eingreift,
- wobei als Ergebnis der Betätigung des Aktuators (40) und nachdem die zweite Schweißelektrode (46) den Kontakt gegen das Blechelement (18) erreicht hat, die axiale Verschiebeeinheit (50, 52) es dem Arm (36) ermöglicht, sich zusammen mit dem zu schweißenden Werkstück (26), das in dem Sitz (41) der ersten Schweißelektrode (39) angeordnet ist, zu bewegen, bis das Werkstück (36) gegen das Blechelement (18) auf der der zweiten Schweißelektrode (46) gegenüberliegenden Seite anstößt, um ein Schließen der Buckelschweißpistole (20, 22, 24) zu bewirken.

2. Pistole nach Anspruch 1, **dadurch gekennzeichnet, dass** zwischen dem Arm (36) und der Trägerstruktur (68, 68a) ein Hilfsaktuator (58) operativ zwischengeschaltet ist, wobei der Hilfsaktuator dazu bestimmt ist, am Ende jedes Schweißschritts eines Werkstücks (26) auf dem jeweiligen Blechelement (18) betätigt zu werden, um die Schweißpistole (20, 22, 24) infolge des Verschiebens des Arms (36) in Bezug auf die Trägerstruktur (68, 68a) zurück in ihren geöffneten Zustand zu bringen.

3. Pistole nach Anspruch 1 oder 2, **dadurch gekennzeichnet, dass** eine verstellbare Positionierungseinheit (62, 63, 64, 65, 66) zwischen der Trägerstruktur (68, 68a) und der Verschiebeeinheit (50, 52) angeordnet ist, wobei die verstellbare Positionierungseinheit dazu ausgelegt ist, eine feine Veränderung der Position der Schweißpistole (20, 22, 24) in Bezug auf die Trägerstruktur (68, 68a) zu ermöglichen.

4. Pistole nach Anspruch 3, **dadurch gekennzeichnet, dass** die verstellbare Positionierungseinheit eine Halterung (64) umfasst, der zwei Serien von verstellbaren Verbindungselementen (62, 63, 65, 66) zugeordnet sind, und die dazu ausgelegt ist, eine Verbindung mit der Trägerstruktur (68, 68a) bzw. mit der Schweißpistole (20, 22, 24) zu ermöglichen.

5. Pistole nach Anspruch 4, **dadurch gekennzeichnet, dass** die Halterung (64) ein Paar von Platten (64a, 64b) umfasst, die rechtwinklig entsprechend einer im Wesentlichen T-förmigen Konfiguration befestigt sind, wobei jede Platte von mindestens einem jeweiligen Schraubverbindungselement (62, 66) gekreuzt wird, wobei ein jeweiliger Abstandshalter (63, 65) mit einer vorbestimmten Dicke zwischen jeder Platte (64a, 64b) und der Schweißpistole (20, 22, 24) auf einer Seite und der Trägerstruktur (68, 68a) auf der anderen Seite angeordnet ist, um jeweils einen gewünschten Abstand der Schweißpistole (20, 22, 24) in Bezug auf die Trägerstruktur (68, 68a) sowohl in Quer- als auch in Axialrichtung zu erhalten.

6. Pistole nach einem der Ansprüche 1 bis 5, **dadurch gekennzeichnet, dass** die Trägerstruktur (68, 68a) entlang einer Führungsformation (70) verschiebbar montiert ist und mit einem Aktuator (28, 30, 32) zur Steuerung seiner Verschiebung verbunden ist, dessen Betätigung es ermöglicht, die Pistole (20, 22, 24) zwischen einer inaktiven Position, in der sie von dem zu schweißenden Element (18) beabstandet ist, und einer aktiven Schweißposition zu bewegen, in der die gemeinsame Achse ihrer Elektroden (39, 46) im Wesentlichen ein in dem Blechelement (18) ausgebildetes Loch (19) kreuzt, an dem ein entsprechendes Werkstück geschweißt werden muss.

7. Schweißanlage zum Befestigen mindestens eines Werkstücks, wie z.B. einer Buchse, auf einer Oberfläche eines Blechelements, **dadurch gekennzeichnet, dass** sie mindestens eine Buckelschweißpistole (20, 22, 24) nach einem der Ansprüche 1 bis 6 sowie ein Stützelement umfasst, das dazu ausgelegt ist, das Blechelement (18) während des Schweißschritts zu stützen.

8. Anlage nach Anspruch 7, **dadurch gekennzeichnet, dass** sie eine Grundplatte (16) zum gemeinsamen Tragen der beweglichen Trägerstruktur (68, 68a) jeder Schweißpistole (20, 22, 24) umfasst.

9. Anlage nach Anspruch 8, **dadurch gekennzeichnet, dass** jede bewegliche Schweißpistole (20, 22, 24) mit einer Schlittenbewegungsvorrichtung (28a, 30a und 32a) verbunden ist, die mit der vorgenannten Führungsformation (70) versehen ist und von der Plattform (16) getragen wird, wobei der Steueraktuator (28, 30, 32) operativ zwischen der Trägerstruktur (68, 68a) und der jeweiligen Schlittenbewegungsvorrichtung (28a, 30a und 32a) jeder beweglichen Schweißpistole (20, 22, 24) angeordnet ist und nach Positionierung des Blechelements (18) auf dem jeweiligen Stützelement automatisch betätigbar ist.

## Revendications

1. Pistolet de soudage pour fixer une pièce, telle qu'une douille, sur une surface d'un élément en feuille, comprenant une première et une deuxième électrodes de soudage (39, 46) opposées et alignées et un actionneur (40) pour déplacer au moins une desdites électrodes (39, 46), la première électrode de soudage (39) étant supportée par un porte-électrode (38) connecté à une première extrémité (36a) d'un bras (36) sensiblement en forme de C dont la deuxième extrémité est reliée au corps dudit actionneur (40), la deuxième électrode de soudage (46) étant fixée à un porte-électrode (44) relié à une tige (42) dudit actionneur (40), qui est montée coulissante le long de l'axe de la première électrode (39), ledit bras (36) étant associé à une structure de support (68, 68a) du pistolet au moyen d'une unité de coulissement axial (50, 52),
**caractérisé en ce que**
- ledit pistolet de soudage est un pistolet de soudage à projection (20, 22, 24),
- la première électrode de soudage (39) a un siège (41) adapté pour recevoir ladite pièce (26), et la deuxième électrode de soudage (46) a une surface d'appui pour venir en butée contre l'élément en feuille (18), laquelle surface a une forme correspondant à une zone de l'élément en feuille (18) opposée à celle à laquelle ladite pièce (26) doit être fixée,
- ledit actionneur (40) du pistolet de soudage à projection (20, 22, 24) commande le mouvement des deux électrodes (39, 46) lors de l'étape de fermeture,
- ladite unité de coulissement axial (50, 52) comprend une glissière (52) reliée à ladite structure de support (68, 68a), ainsi qu'un coulisseau (50) fixé audit bras (36) et engagé de façon coulissante dans ladite glissière (52),
- grâce à quoi, en résultante du fonctionnement dudit actionneur (40) et après que la deuxième électrode de soudage (46) ait atteint le contact contre l'élément en feuille (18), l'unité de coulissement axial (50, 52) permet audit bras (36) de se déplacer avec la pièce (26) à souder, qui est agencée dans ledit siège (41) de la première électrode de soudage (39), jusqu'à ce que la pièce (36) bute contre l'élément en feuille (18) sur le côté opposé à la deuxième électrode de soudage (46), afin de provoquer une fermeture dudit pistolet de soudage à projection (20, 22, 24).

2. Pistolet selon la revendication 1, **caractérisé en ce qu'**un actionneur auxiliaire (58) est interposé fonctionnellement entre le bras (36) et la structure de support (68, 68a), ledit actionneur auxiliaire étant destiné à être actionné à la fin de chaque étape de soudage d'une pièce (26) sur l'élément en feuille respectif (18), afin de ramener le pistolet de soudage (20, 22, 24) dans son état d'ouverture en résultante du coulissement du bras (36) par rapport à la structure de support (68, 68a).

3. Pistolet selon la revendication 1 ou la revendication 2, caractérisé en qu'une unité de positionnement réglable (62, 63, 64, 65, 66) est interposée entre la structure de support (68, 68a) et l'unité de coulissement (50, 52), ladite unité de positionnement réglable étant adaptée pour permettre de modifier finement la position du pistolet de soudage (20, 22, 24) par rapport à la structure de support (68, 68a).

4. Pistolet selon la revendication 3, **caractérisé en ce que** ladite unité de positionnement réglable comprend un support (64) auquel sont associés deux séries d'organes de connexion réglables (62, 63, 65, 66), qui est adapté à permettre la connexion avec la structure de support (68, 68a) et avec le pistolet de soudage (20, 22, 24), respectivement.

5. Pistolet selon la revendication 4, **caractérisé en ce que** ledit support (64) comprend une paire de plaques (64a, 64b) fixées perpendiculairement selon une configuration sensiblement en T, chaque plaque étant traversée par au moins un élément de connexion à vis respectif (62, 66), une entretoise respective (63, 65) ayant une épaisseur prédéterminée étant interposée entre chaque plaque (64a, 64b) et le pistolet de soudage (20, 22, 24), d'un côté, et la structure de support (68, 68a), de l'autre côté, afin d'obtenir une distance souhaitée du pistolet de soudage (20, 22, 24) par rapport à la structure de support (68, 68a), à la fois dans la direction transversale et dans la direction axiale, respectivement.

6. Pistolet selon l'une quelconque des revendications 1 à 5, **caractérisé en ce que** ladite structure de support (68, 68a) est montée coulissante le long d'une formation de guidage (70) et est associée à un actionneur (28, 30, 32) pour commander sa translation, dont le fonctionnement permet de déplacer le pistolet (20, 22, 24) entre une position inactive espacée de l'organe (18) à souder, et une position active de soudage dans laquelle l'axe commun des électrodes (39, 46) de celui-ci traverse sensiblement un trou (19) formé dans l'élément en feuille (18), au niveau duquel une pièce à travailler respective doit être soudée.

7. Installation de soudage pour la fixation d'au moins une pièce, telle qu'une douille, sur une surface d'un élément en feuille, **caractérisée en ce qu'**elle comprend au moins un pistolet de soudage à projection (20, 22, 24) selon l'une quelconque des revendications 1 à 6, ainsi qu'un élément de support adapté pour supporter ledit élément en feuille (18) pendant l'étape de soudage.

8. Installation selon la revendication 7, **caractérisé en ce qu'**elle comprend un socle (16) pour supporter communément la structure de support mobile (68, 68a) de chaque pistolet de soudage (20, 22, 24).

9. Installation selon la revendication 8, **caractérisée en ce que** chaque pistolet de soudage mobile (20, 22, 24) est associé à un dispositif de déplacement à chariot (28a, 30a et 32a) qui est pourvu de la formation de guidage précitée (70) et est supporté par la plate-forme (16), ledit actionneur de commande (28, 30, 32) étant interposé fonctionnellement entre la structure de support (68, 68a) et le dispositif de déplacement à chariot respectif (28a, 30a et 32a) de chaque pistolet de soudage mobile (20, 22, 24), et étant apte à être actionné automatiquement après le positionnement de l'élément en feuille (18) sur l'élément de support respectif.
